# EUROPÄISCHE PATENTANMELDUNG

(11) **EP 2 296 247 A2**
(43) Veröffentlichungstag der Anmeldung: **16.03.2011**
(21) Anmeldenummer: 10180849.1
(22) Anmeldetag: 27.02.2003
(51) Int. Cl.: H02J 3/28, H02J 3/38

(54) **Inselnetz und Verfahren zum Betrieb eines Inselnetzes**

(30) Priorität: 08.03.2002 DE 10210099
(62) Teilanmeldung aus: 03711902.1
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Die vorliegende Erfindung betrifft ein Inselnetz mit wenigstens einem Energieerzeuger, der regenerative Energiequellen nutzt, wobei der Energieerzeuger bevorzugt eine Windenergieanlage mit einem ersten Synchrongenerator ist, mit einem Gleichspannungszwischenkreis mit wenigstens einem ersten Gleichrichter und einem Wechselrichter, mit einem zweiten Synchrongenerator und einem mit dem zweiten Synchrongenerator koppelbaren Verbrennungsmotor. Um ein Inselnetz anzugeben, bei dem der Verbrennungsmotor vollständig abgeschaltet werden kann, solange die Windenergieanlage bei einem möglichst hohen Wirkungsgrad eine ausreichende Leistung für alle angeschlossenen Verbraucher erzeugt, ist eine voll regelbare Windenergieanlage (10) und eine elektromagnetische Kupplung (34) zwischen dem zweiten Synchrongenerator (32) und dem Verbrennungsmotor (30) vorgesehen.

## Beschreibung

Die vorliegende Erfindung betrifft ein elektrisches Inselnetz mit wenigstens einem Energieerzeuger, der mit einem ersten Generator gekoppelt ist. Ferner ist ein zweiter Generator vorgesehen, der mit einem Verbrennungsmotor gekoppelt werden kann. Bei solchen Inselnetzen ist der Energieerzeuger, der mit dem ersten Generator verbunden ist, häufig ein regenerativer Energieerzeuger, wie beispielsweise eine Windenergieanlage, ein Wasserkraftwerk etc.

Solche Inselnetze sind allgemein bekannt und dienen insbesondere der Stromversorgung von Gebieten, die nicht an ein zentrales Stromversorgungsnetz angeschlossen sind, in denen jedoch regenerative Energiequellen wie Wind und/oder Sonne und/oder Wasserkraft u.a. zur Verfügung stehen. Dies können zum Beispiel Inseln sein, oder abgelegene bzw. schwer zugängliche Gebiete mit Besonderheiten hinsichtlich Größe, Lage und/oder Witterungsverhältnissen. Auch in solchen Gebieten ist jedoch eine Strom-, Wasser- und Wärmeversorgung erforderlich. Die dafür notwendige Energie, zumindest die elektrische Energie, wird von dem Inselnetz bereitgestellt und verteilt. Dabei erfordern moderne elektrisch betriebene Geräte zur einwandfreien Funktion allerdings die Einhaltung relativ enger Grenzwerte bei Spannungs- und/oder Frequenzschwankungen im Inselnetz.

Um diese Grenzwerte einhalten zu können, werden unter anderem sogenannte Wind-Diesel-Systeme eingesetzt, bei denen eine Windenergieanlage als primäre Energiequelle eingesetzt wird. Die von der Windenergieanlage erzeugte Wechselspannung wird gleichgerichtet und anschließend über einen Wechselrichter in eine Wechselspannung mit der erforderlichen Netzfrequenz umgerichtet. Auf diese Weise wird eine von der Drehzahl des Generators der Windenergieanlage und damit von dessen Frequenz unabhängige Netzfrequenz erzeugt.

Die Netzfrequenz wird demnach durch den Wechselrichter bestimmt. Hierbei stehen zwei unterschiedliche Varianten zur Verfügung. Die eine Variante ist ein sogenannter selbstgeführter Wechselrichter, der selbst in der Lage ist, eine stabile Netzfrequenz zu erzeugen. Solche selbstgeführten Wechselrichter erfordern jedoch einen hohen technischen Aufwand und sind entsprechend teuer. Eine alternative Variante zu selbstgeführten Wechselrichtern sind netzgeführte Wechselrichter, welche die Frequenz ihrer Ausgangsspannung mit einem vorhandenen Netz synchronisieren. Solche Wechselrichter sind erheblich preisgünstiger als selbstgeführte Wechselrichter, benötigen jedoch stets ein Netz, mit dem sie sich synchronisieren können. Daher muss für einen netzgeführten Wechselrichter stets ein Netzbildner verfügbar sein, der die zur Netzführung des Wechselrichters benötigten Stellgrößen bereitstellt. Ein solcher Netzbildner ist bei bekannten Inselnetzen zum Beispiel ein Synchrongenerator, der von einem Verbrennungsmotor (Dieselmotor) angetrieben wird.

Das bedeutet, dass der Verbrennungsmotor ständig laufen muss, um den Synchrongenerator als Netzbildner anzutreiben. Auch dies ist unter den Gesichtspunkten der Wartungsanforderungen, des Kraftstoffverbrauchs und der Belastung der Umwelt mit Abgasen nachteilig, denn auch wenn der Verbrennungsmotor nur einen Bruchteil seiner verfügbaren Leistung zum Antrieb des Generators als Netzbildner zur Verfügung stellen muss - die Leistung beträgt häufig nur 3 bis 5 kW - ist der Kraftstoffverbrauch nicht unerheblich und liegt bei mehreren Litern Kraftstoff pro Stunde.

Ein weiteres Problem besteht bei bekannten Inselnetzen auch darin, dass als sogenannte "Dump Loads" bezeichnete Blindlasten vorhanden sein müssten, die von dem Primärenergieerzeuger erzeugte überschüssige elektrische Energie verbrauchen, damit der Primärenergieerzeuger bei Abschaltungen von Verbrauchern nicht in einen Leerlaufbetrieb gelangt, der wiederum zu mechanischen Schäden beim Primärenergieerzeuger durch eine zu hohe Drehzahl führen kann. Dies ist insbesondere bei Windenergieanlagen als Primärenergieerzeugern sehr problematisch.

Der Erfindung liegt die Aufgabe zugrunde, die vorgenannten Nachteile zu vermeiden und den Wirkungsgrad eines Inselnetzes zu verbessern.

Die Aufgabe wird erfindungsgemäß durch die Verwendung eines Synchrongenerators nach Anspruch 1 gelöst. Vorteilhafte Weiterbildungen sind in den Unteransprüchen beschrieben.

Der Erfindung liegt die Erkenntnis zugrunde, dass der zweite Generator, der die Funktion des Netzbildners hat, auch mit der elektrischen Energie des Primärenergieerzeugers (Windenergieanlage) angetrieben werden kann, so dass der Verbrennungsmotor völlig abgeschaltet und vom zweiten Generator abgekoppelt sein kann. Hierbei befindet sich also der zweite Generator nicht mehr im Generator, sondern im Motorbetrieb, wobei die hierzu benötigte elektrische Energie vom Primärenergieerzeuger bzw. dessen Generator geliefert wird. Ist die Kupplung zwischen dem zweiten Generator und dem Verbrennungsmotor eine elektromagnetische Kupplung, kann diese Kupplung durch Beaufschlagung mit elektrischer Energie des Primärenergieerzeugers bzw. dessen Generators betätigt werden. Wird die elektrische Energie an der Kupplung abgeschaltet, wird die Kupplung getrennt. Der zweite Generator wird dann, wie vorbeschrieben, bei abgeschaltetem Betrieb des Verbrennungsmotors mit elektrischer Energie vom Primärenergieerzeuger beaufschlagt und angetrieben (Motorbetrieb), so dass trotz abgeschalteten Verbrennungsmotors der Netzbildner in Betrieb bleibt. Sobald eine Zuschaltung des Verbrennungsmotors und damit der Generatorbetrieb des zweiten Generators erforderlich ist, kann der Verbrennungsmotor gestartet und mittels der elektrisch betätigbaren Kupplung mit dem zweiten Generator gekoppelt werden, um diesen anzutreiben, damit dieser zweite Generator im Generatorbetrieb zusätzliche Energie für das elektrische Inselnetz zur Verfügung stellen kann.

Der Einsatz einer voll regelbaren Windenergieanlage gestattet den Verzicht auf "Dump Loads", da die Windenergieanlage durch ihre vollständige Regelbarkeit, also variable Drehzahl und variable Blattverstellung, in der Lage ist, genau die benötigte Leistung zu erzeugen, so dass ein "Entsorgen" überschüssiger Energie nicht erforderlich ist, da die Windenergieanlage genau die benötigte Leistung erzeugt. Dadurch, dass die Windenergieanlage nur so viel Energie erzeugt, wie im Netz benötigt wird (oder zur weiteren Aufladung von Zwischenspeichern erforderlich ist), muss auch keine überschüssige Leistung nutzlos beseitigt werden und der gesamte Wirkungsgrad der Windenergieanlage aber auch des gesamten Inselnetzes ist erheblich besser als bei der Verwendung von "Dump Loads".

In einer bevorzugten Ausführungsform der Erfindung enthält die Windenergieanlage einen Synchrongenerator, dem ein Wechselrichter nachgeschaltet ist. Dieser Wechselrichter besteht aus einem Gleichrichter, einem Gleichspannungszwischenkreis und einem Frequenzumrichter. Ist noch eine weitere Gleichspannung (Gleichstrom) bereitstellende Energiequelle, beispielsweise ein Photovoltaikelement, im Inselnetz ausgebildet, so ist es zweckmäßig, dass solche weiteren Primärenergieerzeuger, wie Photovoltaikelemente, an den Gleichspannungs-zwischenkreis des Wechselrichters angeschlossen sind, so dass die Energie der zusätzlichen regenerativen Energiequelle im Gleichspannungszwischenkreis eingespeist werden kann. Dadurch kann das durch den ersten Primärenergieerzeuger verfügbare Leistungsangebot erhöht werden.

Um einerseits Schwankungen der verfügbaren Leistung und/oder eine erhöhte Leistungsnachfrage spontan auszugleichen und andererseits verfügbare Energie, die jedoch momentan nicht nachgefragt wird, nutzen zu können, sind bevorzugt Zwischenspeicher vorgesehen, welche elektrische Energie speichern und bei Bedarf schnell abgeben können. Solche Speicher können beispielsweise elektrochemische Speicher wie Akkumulatoren sein, aber auch Kondensatoren (Caps) oder auch chemische Speicher wie Wasserstoffspeicher, indem durch Elektrolyse mit der überschüssigen elektrischen Energie erzeugter Wasserstoff gespeichert wird. Zur Abgabe ihrer elektrischen Energie sind auch solche Speicher direkt oder über entsprechende Lade-/Entladungsschaltungen am Gleichspannungszwischenkreis des Wechselrichters angeschlossen.

Eine weitere Form der Energiespeicherung ist die Umwandlung in Rotationsenergie, die in einem Schwungrad gespeichert wird. Dieses Schwungrad ist in einer bevorzugten Weiterbildung mit dem zweiten Synchrongenerator gekoppelt und erlaubt somit ebenfalls, die gespeicherte Energie zum Antrieb des Netzbildners zu verwenden.

Sämtlichen Speichern kann elektrische Energie zugeführt werden, wenn der Energieverbrauch im Inselnetz geringer ist als das Leistungsvermögen des Primärenergieerzeugers, beispielsweise der Windenergieanlage. Wenn beispielsweise der Primärenergieerzeuger eine Windenergieanlage mit 1,5 MW Nennleistung oder ein Windpark mit mehreren Windenergieanlagen mit 10 MW Nennleistung ist und die Windverhältnisse so sind, dass der Primärenergieerzeuger im Nennbetrieb gefahren werden kann, gleichwohl die Leistungsaufnahme im Inselnetz deutlich geringer ist als die Nennleistung der Primärenergieerzeuger kann bei einem solchen Betrieb (insbesondere Nachts und in Zeiten geringen Verbrauchs im Inselnetz) der Primärenergieerzeuger so gefahren werden, dass sämtliche Energiespeicher aufgeladen (aufgefüllt) werden, um in Zeiten, wenn die Leistungsaufnahme des Inselnetzes größer als das Leistungsangebot des Primärenergieerzeugers, zunächst einmal - unter Umständen nur kurzzeitig - die Energiespeicher zuzuschalten.

In einer bevorzugten Weiterbildung sind alle Energieerzeuger und Zwischenspeicher mit Ausnahme des am zweiten Generator angeschlossenen Energiekomponenten (Verbrennungsmotor, Schwungrad) an einen gemeinsamen, busartig konfigurierten Gleichspannungszwischenkreis angeschlossen, der mit einem einzelnen, netzgeführten Umrichter (Wechselrichter) abgeschlossen ist. Durch die Verwendung eines einzelnen, netzgeführten Wechselrichters an einem Gleichspannungszwischenkreis wird eine sehr kostengünstige Anordnung geschaffen.

Ferner ist es vorteilhaft, wenn noch weitere (redundante) Verbrennungsmotoren und daran koppelbare dritte Generatoren (z.B. Synchrongeneratoren) vorgesehen sind, um bei einer größeren Leistungsnachfrage als durch die regenerative Energieerzeuger und Speicherenergie verfügbar ist, diese durch Betrieb der weiteren (redundanten) Erzeugungssysteme zu erzeugen.

Generell ist zwar an der Frequenz im Netz erkennbar, ob das Leistungsangebot der benötigten Leistung entspricht. Bei einem Überangebot von Leistung steigt nämlich die Netzfrequenz an, während sie bei zu geringer Leistung abfällt. Allerdings treten solche Frequenzabweichungen verzögert auf und ein Ausgleich solcher Frequenzschwankungen wird mit steigender Komplexität des Netzes zunehmend schwieriger.

Um eine schnelle Leistungsanpassung zu ermöglichen, wird an die Sammelschiene eine Vorrichtung angeschlossen, die in der Lage ist, die im Netz benötigte Leistung zu erfassen. Dadurch kann ein Leistungsbedarf bzw. Leistungsüberangebot sofort erkannt und kompensiert werden, bevor Schwankungen der Netzfrequenz überhaupt auftreten können.

Im Folgenden wird eine Ausführungsform der Erfindung beispielhaft näher erläutert. Dabei zeigen:
- Fig. 1: ein Prinzipschaltbild eines erfindungsgemäßen Inselnetzes;
- Fig. 2: eine Variante des in Fig. 1 gezeigten Prinzips; und
- Fig. 3: eine bevorzugte Ausführungsform eines erfindungsgemäßen Inselnetzes.

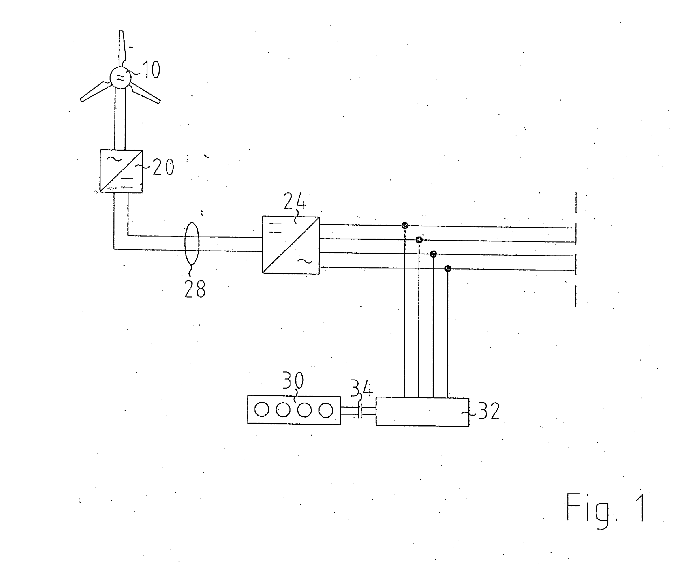

Fig. 1 zeigt eine Windenergieanlage mit einem nachgeschalteten Umrichter, bestehend aus einem Gleichrichter 20, über den die Windenergieanlage an einen Gleichspannungszwischenkreis 28 angeschlossen ist, sowie einen am Ausgang des Gleichspannungszwischenkreises 28 angeschlossenen Wechselrichter 24.

Parallel zum Ausgang des Wechselrichters 24 ist ein zweiter Synchrongenerator 32 angeschlossen, der wiederum über eine elektromagnetische Kupplung 34 mit einem Verbrennungsmotor 30 verbunden ist. Die Ausgangsleitungen des Wechselrichters 24 und des zweiten Synchrongenerators 32 versorgen die (nicht dargestellten) Verbraucher mit der benötigten Energie.

Dazu erzeugt die Windenergieanlage 10 die Leistung zur Versorgung der Verbraucher. Die von der Windenergieanlage 10 erzeugte Energie wird durch den Gleichrichter 20 gleichgerichtet und in den Gleichspannungszwischenkreis 28 eingespeist.

Der Wechselrichter 24 erzeugt aus der anliegenden Gleichspannung eine Wechselspannung und speist sie in das Inselnetz ein. Da der Wechselrichter 24 aus Kostengründen bevorzugt als netzgeführter Wechselrichter ausgeführt ist, ist ein Netzbildner vorhanden, mit dem sich der Wechselrichter 24 synchronisieren kann.

Dieser Netzbildner ist der zweite Synchrongenerator 32. Dieser Synchrongenerator 32 arbeitet bei abgeschaltetem Verbrennungsmotor 30 im Motorbetrieb und wirkt dabei als Netzbildner. Die Antriebsenergie ist in diesem Betriebsmodus elektrische Energie von der Windenergieanlage 10. Diese Antriebsenergie für den Synchrongenerator 32 muss die Windenergieanlage 10 ebenso wie die Verluste des Gleichrichters 20 und des Wechselrichters 24 zusätzlich erzeugen.

Neben der Funktion als Netzbildner erfüllt der zweite Synchrongenerator 32 weitere Aufgaben, wie die Blindleistungserzeugung im Netz, die Lieferung von Kurzschluss-Strom, Wirkung als Flickerfilter und die Spannungsregelung.

Werden Verbraucher abgeschaltet und sinkt daher der Energiebedarf, so wird die Windenergieanlage 10 derart gesteuert, dass sie entsprechend weniger Energie erzeugt, so daß die Verwendung von Dump Loads verzichtbar ist.

Steigt der Energiebedarf der Verbraucher so weit an, dass dieser von der Windenergieanlage allein nicht mehr gedeckt werden kann, kann der Verbrennungsmotor 28 anlaufen und die elektromagnetische Kupplung 34 wird mit einer Spannung beaufschlagt. Dadurch stellt die Kupplung 34 eine mechanische Verbindung zwischen dem Verbrennungsmotor 30 und dem zweiten Synchrongenerator 32 her und der Generator 32 (und Netzbildner) liefert (jetzt im Generatorbetrieb) die benötigte Energie.

Durch eine geeignete Dimensionierung der Windenergieanlage 10 kann erreicht werden, dass im Mittel ausreichend Energie aus Windenergie zur Versorgung der Verbraucher bereitgestellt wird. Dadurch ist der Einsatz des Verbrennungsmotors 30 und der damit einhergehende Brennstoffverbrauch auf ein Minimum reduziert.

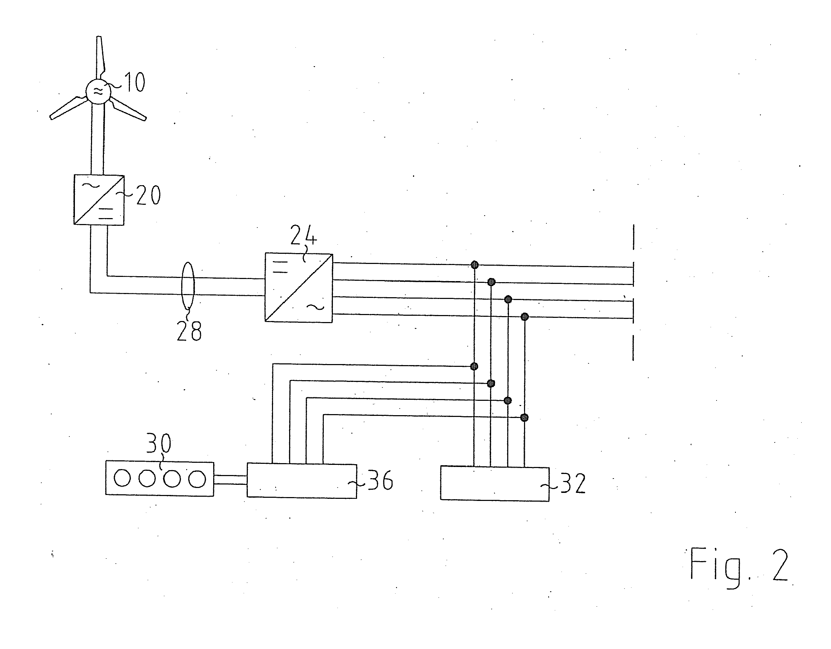

In Fig. 2 ist eine Variante des in Fig. 1 gezeigten Inselnetzes gezeigt. Der Aufbau entspricht im wesentlichen der in Fig. 1 gezeigten Lösung. Der Unterschied besteht darin, dass hier dem zweiten Generator 32, der als Netzbildner wirkt, kein Verbrennungsmotor 30 zugeordnet ist. Der Verbrennungsmotor 30 ist mit einem weiteren, dritten (Synchron)Generator 36 verbunden, der bei Bedarf zuschaltbar ist. Der zweite Synchrongenerator 32 arbeitet also ständig im Motorbetrieb als Netzbildner, Blindleistungserzeuger, Kurzschlussstrom-Quelle, Flickerfilter und Spannungsregler.

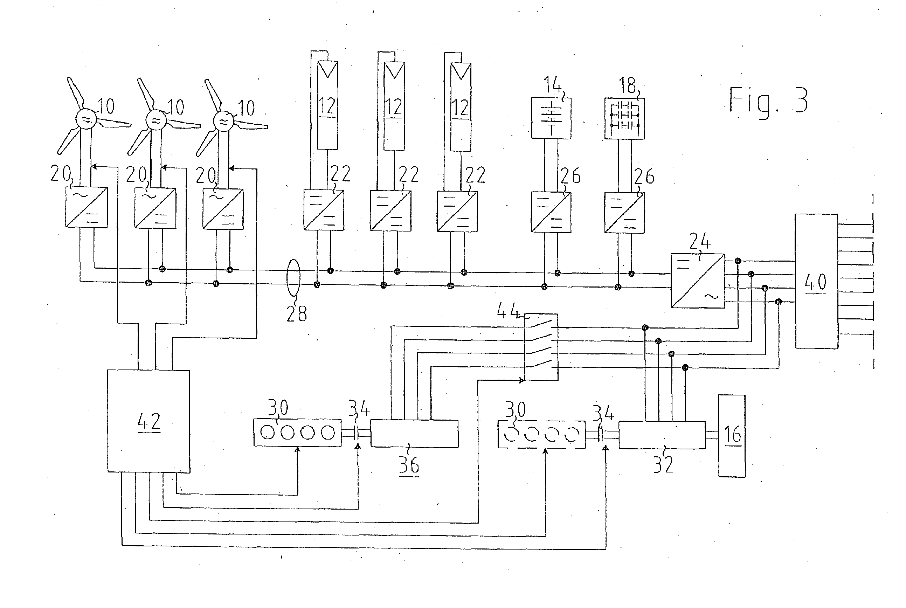

In Fig. 3 ist eine weitere bevorzugte Ausführungsform eines Inselnetzes gezeigt. In dieser Fig. sind drei Windenergieanlagen 10 - die zum Beispiel einen Windpark bilden - mit ersten (Synchron-)Generatoren dargestellt, die jeweils an einen Gleichrichter 20 angeschlossen sind. Die Gleichrichter 20 sind an der Ausgangsseite parallel geschaltet und speisen die von den Windenergieanlagen 10 erzeugte Energie in einen Gleichspannungszwischenkreis 28 ein.

Weiterhin sind drei Photovoltaikelemente 12 dargestellt, die jeweils an einen Hochsetzsteller 22 angeschlossen sind. Die Ausgangsseiten der Hochsetzsteller 22 sind parallel ebenfalls an den Gleichspannungszwischenkreis 28 angeschlossen.

Weiterhin ist ein Akkumulatorblock 14 dargestellt, der symbolisch für einen Zwischenspeicher steht. Dieser Zwischenspeicher kann neben einem elektrochemischen Speicher wie dem Akkumulator 14 ein chemischer wie ein Wasserstoffspeicher (nicht dargestellt) sein. Der Wasserstoffspeicher kann zum Beispiel mit Wasserstoff beschickt werden, der durch Elektrolyse gewonnen wird.

Daneben ist ein Kondensatorblock 18 dargestellt, der die Möglichkeit zeigt, geeignete Kondensatoren als Zwischenspeicher zu verwenden. Diese Kondensatoren können zum Beispiel sogenannte Ultra-Caps der Fa. Siemens sein, die sich neben einer hohen Speicherkapazität durch geringe Verluste auszeichnen.

Akkumulatorblock 14 und Kondensatorblock 18 (beide Blöcke können auch mehrzahlig ausgebildet sein) sind jeweils über Lade/Entladeschaltungen 26 an den Gleichspannungszwischenkreis 28 angeschlossen. Der Gleichspannungszwischenkreis 28 ist mit einem (einzigen) Wechselrichter 24 (oder einer Mehrzahl parallelgeschalteter Wechselrichter) abgeschlossen, wobei der Wechselrichter 24 bevorzugt netzgeführt ausgebildet ist.

An der Ausgangsseite des Wechselrichters 24 ist eine Verteilung 40 (eventuell mit Transformator) angeschlossen, die von dem Wechselrichter 24 mit der Netzspannung versorgt wird. An der Ausgangsseite des Wechselrichters 24 ist ebenfalls ein zweiter Synchrongenerator 32 angeschlossen. Dieser Synchrongenerator 32 ist der Netzbildner, Blindleistungsund Kurzschlussstrom-Erzeuger, Flickerfilter und Spannungsregler des Inselnetzes.

Mit dem zweiten Synchrongenerator 32 ist ein Schwungrad 16 gekoppelt. Dieses Schwungrad 16 ist ebenfalls ein Zwischenspeicher und kann zum Beispiel während des motorischen Betriebs des Netzbildners Energie speichern.

Zusätzlich können dem zweiten Synchrongenerator 32 ein Verbrennungsmotor 30 und eine elektromagnetische Kupplung 34 zugeordnet sein, die bei zu geringer Leistung aus regenerativen Energiequellen den Generator 32 antreiben und im Generatorbetrieb betreiben. Auf diese Weise kann fehlende Energie in das Inselnetz eingespeist werden.

Der dem zweiten Synchrongenerator 32 zugeordnete Verbrennungsmotor 30 und die elektromagnetische Kupplung 34 sind gestrichelt dargestellt, um zu verdeutlichen, dass der zweite Synchrongenerator 32 alternativ nur im Motorbetrieb (und gegebenenfalls mit einem Schwungrad als Zwischenspeicher) als Netzbildner, Blindleistungserzeuger, Kurzschluss-strom-Quelle, Flickerfilter und Spannungsregelung betrieben werden kann.

Insbesondere wenn der zweite Synchrongenerator 32 ohne Verbrennungsmotor 30 vorgesehen ist, kann ein dritter Synchrongenerator 36 mit einem Verbrennungsmotor vorgesehen sein, um eine länger andauernde Leistungslücke auszugleichen. Dieser dritte Synchrongenerator 36 kann durch eine Schalteinrichtung 44 im Ruhezustand vom Inselnetz getrennt werden, um nicht als zusätzlicher Energieverbraucher das Inselnetz zu belasten.

Schließlich ist eine (up/Computer-)Steuerung 42 vorgesehen, welche die einzelnen Komponenten des Inselnetzes steuert und so einen weitgehend automatisierten Betrieb des Inselnetzes erlaubt.

Durch eine geeignete Auslegung der einzelnen Komponenten des Inselnetzes kann erreicht werden, dass die Windenergieanlagen 10 im Mittel ausreichend Energie für die Verbraucher bereitstellen. Dieses Energieangebot wird gegebenenfalls durch die Photovoltaikelemente ergänzt.

Ist das Leistungsangebot der Windenergieanlagen 10 und/oder der Photovoltaikelemente 12 geringer/größer als der Bedarf der Verbraucher, können die Zwischenspeicher 14, 16, 18 beansprucht (entladen/geladen) werden, um entweder die fehlende Leistung bereitzustellen (entladen) oder die überschüssige Energie zu speichern (laden). Die Zwischenspeicher 14, 16, 18 glätten also das stets schwankende Angebot der regenerativen Energien.

Dabei ist es wesentlich von der Speicherkapazität der Zwischenspeicher 14, 16, 18 abhängig, über welchen Zeitraum welche Leistungsschwankung ausgeglichen werden kann. Als Zeitraum kommen bei großzügiger Dimensionierung der Zwischenspeicher einige Stunden bis zu einigen Tagen in Betracht.

Erst bei Leistungslücken, welche die Kapazitäten der Zwischenspeicher 14, 16, 18 überschreiten, ist eine Zuschaltung der Verbrennungsmotoren 30 und der zweiten bzw. dritten Synchrongeneratoren 32, 36 erforderlich.

In der vorstehenden Beschreibung der Ausführungsbeispiele ist der Primärenergieerzeuger stets ein solcher, welcher eine regenerative Energiequelle, wie beispielsweise Wind oder Sonne (Licht), nutzt. Der Primärenergieerzeuger kann allerdings sich auch einer anderen regenerativen Energiequelle, zum Beispiel Wasserkraft, bedienen oder auch ein Erzeuger sein, welcher fossile Brennstoffe verbraucht.

Auch kann an das Inselnetz eine Meerwasserentsalzungsanlage (nicht dargestellt) angeschlossen sein, so dass in Zeiten, in denen die Verbraucher am Inselnetz deutlich weniger elektrische Leistung benötigen als die Primärenergieerzeuger bereitstellen können, die Meerwasserentsalzungsanlage die "überschüssige", also noch bereitzustellende elektrische Leistung verbraucht, um Brauchwasser/Trinkwasser zu erzeugen, welches dann in Auffangbecken gespeichert werden kann. Sollte zu gewissen Zeiten der elektrische Energieverbrauch des Inselnetzes so groß sein, dass alle Energieerzeuger nur gerade in der Lage sind, diese Leistung zur Verfügung zu stellen, wird die Meerwasserentsalzungsanlage auf ein Minimum heruntergefahren, gegebenenfalls sogar ganz abgeschaltet. Auch die Steuerung der Meerwasserentsalzungsanlage kann über die Steuerung 42 erfolgen.

In Zeiten, in denen die elektrische Leistung der Primärenergieerzeuger nur zum Teil vom elektrischen Netz benötigt wird, kann auch ein - ebenfalls nicht dargestelltes - Pumpspeicherwerk betrieben werden, mittels dem Wasser (oder andere Flüssigkeitsmedien) von einem niederen auf ein höheres Potential gebracht werden, so dass im Bedarfsfall auf die elektrische Leistung des Pumpspeicherwerks zugegriffen werden kann. Auch die Steuerung des Pumpspeicherwerks kann über die Steuerung 42 erfolgen.

Es ist auch möglich, dass die Meerwasserentsalzungsanlage und ein Pumpspeicherwerk kombiniert werden, indem also das von der Meerwasserentsalzungsanlage erzeugte Brauchwasser (Trinkwasser) auf ein höheres Niveau gepumpt wird, welches dann zum Antrieb der Generatoren des Pumpspeicherwerks im Bedarfsfall herangezogen werden kann.

Alternativ zu den in Fig. 3 beschriebenen und dargestellten Varianten der Erfindung können auch weitere Variationen an der erfindungsgemäßen Lösung vorgenommen werden. So kann beispielsweise auch die elektrische Leistung der Generatoren 32 und 36 (siehe Fig. 3) über einen Gleichrichter gleichgerichtet auf die Sammelschiene 28 eingespeist werden.

Ist dann das Leistungsangebot der Primär-Energieerzeuger 10 oder der Zwischenspeicher 12, 14, 16, 18 zu gering oder weitestgehend aufgebraucht, wird der Verbrennungsmotor 30 in Gang gesetzt und dieser treibt dann den Generator 32, 36 an. Der Verbrennungsmotor stellt dann also für das Inselnetz weitestgehend die elektrische Energie innerhalb des Inselnetzes zur Verfügung, gleichzeitig kann er aber auch der Zwischenspeicher 16, also das Schwungrad wiederum aufladen und bei Einspeisung der elektrischen Energie die Generatoren 32 und 36 in den Gleichstromzwischenkreis 28 können auch die dort dargestellten Zwischenspeicher 14, 18 ebenfalls aufgeladen werden. Eine solche Lösung hat besonders den Vorteil, dass der Verbrennungsmotor in einem günstigen, nämlich im optimalen Betrieb laufen kann, wo auch die Abgase am geringsten sind und auch die Drehzahl in einem optimalen Bereich liegt, so dass auch der Verbrauch des Verbrennungsmotors in einem bestmöglichen Bereich liegt. Wenn bei einem solchen Betrieb beispielsweise die Zwischenspeicher 14, 18 oder 16 weitestgehend aufgefüllt sind, kann dann der Verbrennungsmotor abgeschaltet werden und dann die Netzversorgung weitestgehend mit der in den Speichern 14, 16, 18 gespeicherte Energie erfolgen, so weit nicht ausreichend Energie aus den Energieerzeugern 10, 12 bereitgestellt werden kann. Unterschreitet der Ladezustand der Zwischenspeicher 14, 16, 18 einen kritischen Wert, so wird wiederum der Verbrennungsmotor zugeschaltet und über die vom Verbindungsmotor 30 bereitgestellte Energie der Generatoren 32 und 36 in den Gleichstromzwischenkreis 28 eingespeist und die Zwischenspeicher 14, 16, 18 werden wiederum hierbei auch geladen.

Bei den vorgeschriebenen Varianten wird also ganz besonders darauf geachtet, dass der Verbrennungsmotor in einem optimalen Drehzahlbereich laufen kann, was insgesamt seinen Betrieb verbessert.

Hierbei sind in den Generatoren 32, 36 übliche Gleichrichter (wie z.B. Gleichrichter 20) nachgeschaltet, über die die elektrische Energie in den Gleichstromzwischenkreis 28 eingespeist wird.

Eine Form der verwendeten Zwischenspeicher 14 ist ein Akkumulatorblock, also z.B. eine Batterie. Eine andere Form des Zwischenspeichers ist ein Kondensatorblock 18, z.B. ein Kondensator vom Typ Ultracap der Firma Siemens. Das Lade-, vor allem aber das Entladeverhalten der vorgenannten Zwischenspeicher ist relativ unterschiedlich und sollte bei der vorliegenden Erfindung sinnvoll berücksichtigt werden.

So haben Akkumulatoren wie andere übliche Batterien bei jedem Lade/Entlade-Vorgang eine wenn auch geringe, so doch irreversible Kapazitätseinbuße. Bei sehr häufigen Lade/Entlade-Vorgängen führt dies in vergleichsweise kurzer Zeit zu einem signifikanten Kapazitätsverlust, der abhängig von der Anwendung entsprechend schnell einen Ersatz dieses Zwischenspeichers erforderlich macht.

Dynamisch belastbare Zwischenspeicher wie ein Kondensatorspeicher vom Typ Ultracap oder auch ein Schwungradspeicher haben die vorgenannten Probleme nicht. Allerdings sind Kondensatorspeicher vom Typ Ultracap als auch Schwungradspeicher bezogen auf eine einzelne Kilowattstunde erheblich teurer als ein üblicher Akkumulatorblock oder sonstiger Batteriespeicher.

Anders als bei der Verwendung nachwachsender Rohstoffe oder bei Solarenergie ist Windenergie kaum sicher prognostizierbar. Also versucht macht, soviel Energie wie möglich regenerativ zu erzeugen und wenn diese Energie nicht abgenommen werden kann, in Speichern mit größtmöglicher Speicherkapazität zu speichern, um diese Energie dann bei Bedarf verfügbar zu haben und abgeben zu können. Naturgemäß werden also alle Energiespeicher mit maximaler Größe ausgelegt, um möglichst lange Ausfallzeiten überbrücken zu können.

Ein weiterer Unterschied zwischen Zwischenspeichern vom Typ eines Akkumulatorblocks und Zwischenspeichern vom Typ eines Ultracaps oder Schwungradspeichers besteht auch darin, dass die elektrische Leistung von Ultracaps und Schwungradspeichern innerhalb von kürzester Zeit schadlos abgehoben werden kann, während Zwischenspeicher vom Typ eines Akkumulatorblocks nicht eine so hohe Entladerate (DE/DT) aufweisen.

Es ist daher auch ein Aspekt der Erfindung der vorliegenden Anmeldung, dass die unterschiedlichen Zwischenspeicher verschiedenen Typs abhängig von ihren Betriebseigenschaften und Kosten für verschiedene Aufgaben verwendet werden können. Im Lichte der vorstehenden Erkenntnisse erscheint es daher auch nicht vernünftig, einen Zwischenspeicher vom Typ eines Schwungradspeichers oder eines Ultracaps mit maximaler Kapazität auszulegen, um möglichst lange Ausfallzeiten zu überbrücken, haben diese Speicher doch gerade ihre Stärke darin, insbesondere kurze Ausfallzeiten schadlos für den Zwischenspeicher überbrücken zu können, während sie für die Überbrückung sehr langer Ausfallzeiten sehr teuer werden.

Es ist auch nicht sinnvoll, Zwischenspeicher vom Typ eines Akkumulatorblocks oder eines Batteriespeichers zur Frequenzregelung zu verwenden, denn die ständig erforderlichen Lade/Entlade-Vorgänge führen sehr schnell, nämlich innerhalb von wenigen Wochen und günstigenfalls Monaten zu irreversiblen Kapazitätsverlusten und erzwingen den bereits erwähnten Austausch eines solchen Speichers. Vielmehr sollten Zwischenspeicher vom Typ eines Akkumulatorblocks oder von sonstigen Batteriespeichern dazu verwendet werden, einen "Langzeitspeicher" zu bilden, der bei Ausfällen in der Größenordnung von Minuten (z.B. von einem Bereich von 5 bis 15 Minuten) die Versorgung übernimmt, während dynamisch belastbare Zwischenspeicher vom Typ eines Ultracaps und/oder eines Schwungradspeichers zur Frequenzregelung verwendet werden, d.h. also bei Absinken der Frequenz im Netz zusätzliche Energie einspeisen und bei ansteigender Frequenz im Netz Energie aufnehmen.

Mithin können also unterschiedliche Verwendungsweisen der Zwischenspeicher verschiedenen Typs bei noch vertretbaren Kosten in das Netz, insbesondere wenn es sich um ein Inselnetz handelt, zur Frequenzstabilität des Netzes beitragen wie aber auch Ausfälle in der Erzeugung von elektrischer Energie auf der Erzeugerseite für einige Minuten sicher überbrücken kann. Mithin kann durch die unterschiedliche Verwendung von Zwischenspeichern unterschiedlichen Typs das Netz gestützt werden, einmal hinsichtlich der Frequenzstabilität, ein anderes Mal hinsichtlich der ausreichenden Energieversorgung für einen Zeitraum im Minutenbereich, wenn die zur Verfügung gestellte Energie auf der Erzeugerseite nicht ausreicht.

Da die einzelnen Komponenten der Erzeugerseite von der Steuerungseinrichtung 42 gesteuert werden, und die Steuerungseinrichtung auch erkennt, welche Art von netzstützenden Maßnahmen durchgeführt werden müssen, kann auch durch eine entsprechende Ansteuerung der Zwischenspeicher verschiedenen Typs mal der eine Zwischenspeicher zu Stabilisierung der Netzfrequenz, mal ein anderer Zwischenspeicher zur Überbrückung von Ausfallzeiten auf der Erzeugerseite im Minutenbereich herangezogen werden. Gleichzeitig können durch den verschiedenen Einsatz der Zwischenspeicher verschiedenen Typs bei unterschiedlichen Netzproblemen noch die Kosten für die gesamten Zwischenspeicher auf ein relatives Minimum reduziert werden.

In der realen Umsetzung ist es daher vorteilhaft, wenn die Zwischenspeicher vom Typ eines Akkumulatorblocks oder eines Batteriespeichers über ein erheblich größeres Energieladevermögen verfügen als Zwischenspeicher vom Typ eines Ultracaps oder Schwungradspeichers. So kann beispielsweise die Kapazität im Zwischenspeicher vom Typ eines Akkumulators oder eines Batteriespeichers deutlich mehr als fünf- bis zehnmal so groß sein wie die Kapazität von einem Zwischenspeicher vom Typ eines Ultracaps oder eines Schwungradspeichers.

Nachfolgend eine Liste weiterer Ausführungsformen der Erfindung
Ausführungsform 1 Elektrisches Inselnetz mit wenigstens einem ersten Energieerzeuger, der eine regenerative Energiequelle nutzt, wobei der Energieerzeuger bevorzugt eine Windenergieanlage mit einem Generator ist, wobei ein zweiter Generator vorgesehen ist, welcher mit einem Verbrennungsmotor koppelbar ist, gekennzeichnet durch eine Windenergieanlage, die hinsichtlich ihrer Drehzahl und Blattverstellung regelbar ist und eine Sammelschiene zum Einspeisen der erzeugten Energie in das Netz aufweist und eine an eine Sammelschiene angeschlossene Vorrichtung zum Erfassen der im Netz benötigten Leistung vorgesehen ist.
Ausführungsform 2 Elektrisches Inselnetz nach Ausführungsform 1, dadurch gekennzeichnet, dass der erste Energieerzeuger einen Synchrongenerator aufweist, der einen Umrichter mit einem Gleichspannungszwischenkreis mit wenigstens einem ersten Gleichrichter und einem Wechselrichter enthält.
Ausführungsform 3 Elektrisches Inselnetz nach Ausführungsform 1 oder 2, gekennzeichnet durch wenigstens ein an den Gleichspannungszwischenkreis angeschlossenes elektrisches Element zur Einspeisung elektrischer Energie mit Gleichspannung.
Ausführungsform 4 Elektrisches Inselnetz nach Ausführungsform 3, dadurch gekennzeichnet, dass das elektrische Element ein Photovoltaikelement und/oder ein mechanischer Energiespeicher und/oder ein elektrochemischer Speicher und/oder ein Kondensator und/oder ein chemischer Speicher als elektrischer Zwischenspeicher ist.
Ausführungsform 5 Elektrisches Inselnetz nach einer der vorhergehenden Ausführungsformen, gekennzeichnet durch ein Schwungrad, welches mit dem zweiten oder einem dritten Generator koppelbar ist.
Ausführungsform 6 Elektrisches Inselnetz nach einer der vorhergehenden Ausführungsformen, gekennzeichnet durch mehrere Verbrennungsmotoren, die jeweils mit einem Generator gekoppelt werden können.
Ausführungsform 7 Elektrisches Inselnetz nach einer der vorhergehenden Ausführungsformen, gekennzeichnet durch eine Steuerung zum Steuern des Inselnetzes.
Ausführungsform 8 Elektrisches Inselnetz nach einer der vorhergehenden Ausführungsformen, gekennzeichnet durch einen Hochsetz-/Tiefsetzsteller 22 zwischen dem elektrischen Element und dem Gleichspannungszwischenkreis.
Ausführungsform 9 Elektrisches Inselnetz nach einer der vorhergehenden Ausführungsformen, gekennzeichnet durch Lade-/Entladeschaltungen 26 zwischen dem elektrischen Speicherelement und dem Gleichspannungszwischenkreis.
Ausführungsform 10 Elektrisches Inselnetz nach einer der vorhergehenden Ausführungsformen, gekennzeichnet durch ein Schwungrad mit einem Generator und einem nachgeschalteten Gleichrichter 20 zur Einspeisung elektrischer Energie in den Gleichspannungszwischenkreis 28.
Ausführungsform 11 Elektrisches Inselnetz nach einer der vorhergehenden Ausführungsformen, dadurch gekennzeichnet, dass sämtliche regenerativen Energiequellen nutzende Energieerzeuger 10, 12 und Zwischenspeicher 14, 16, 18 einen gemeinsamen Gleichspannungszwischenkreis speisen.
Ausführungsform 12 Elektrisches Inselnetz nach einer der vorhergehenden Ausführungsformen, gekennzeichnet durch einen netzgeführten Wechselrichter.
Ausführungsform 13 Elektrisches Inselnetz nach einer der vorhergehenden Ausführungsformen, dadurch gekennzeichnet, dass die Energie zum Betrieb der elektromagnetischen Kupplung durch einen elektrischen Speicher und/oder durch den Primärenergieerzeuger zur Verfügung gestellt wird.
Ausführungsform 14 Inselnetz nach einer der vorhergehenden Ausführungsformen, dadurch gekennzeichnet, dass am Inselnetz eine Meerwasserentsalzungs/ Brauchwassererzeugungsanlage angeschlossen ist, welche Brauchwasser (Trinkwasser) erzeugt, wenn das Leistungsangebot der Primärenergieerzeuger größer ist als der Leistungsverbrauch der anderen am Inselnetz angeschlossenen elektrischen Verbraucher.
Ausführungsform 15 Inselnetz nach einer der vorhergehenden Ausführungsformen, dadurch gekennzeichnet, dass ein Pumpspeicherwerk vorgesehen ist, welches seine elektrische Energie von dem Primärenergieerzeuger erhält.
Ausführungsform 16 Elektrisches Inselnetz mit wenigstens einer ersten Primärenergieerzeuger zur Erzeugung elektrischer Energie für ein elektrisches Inselnetz, wobei ein Synchrongenerator vorgesehen ist, welcher die Funktion eines Netzbildners hat, wobei der Synchrongenerator hierzu im Motorbetrieb arbeiten kann und die für den Motorbetrieb benötigte Energie vom Primärenergieerzeuger zur Verfügung gestellt wird.
Ausführungsform 17 Inselnetz nach Ausführungsform 16, dadurch gekennzeichnet, dass der Generator über eine Kupplung mit einem Verbrennungsmotor verbindbar ist, welcher abgeschaltet ist, wenn die elektrische Leistung des Primärenergieerzeugers größer oder etwa gleich groß ist wie die elektrische Verbrauchsleistung im Inselnetz.
Ausführungsform 18 Inselnetz nach einer der vorstehenden Ausführungsformen und mit einer Sammelschiene zum Einspeisen der erzeugten Energie in das Netz, gekennzeichnet durch eine an die Sammelschiene angeschlossene Vorrichtung zum Erfassen der im Netz benötigten Leistung.
Ausführungsform 19 Verfahren zur Betriebssteuerung eines elektrischen Inselnetzes mit wenigstens einer Windenergieanlage, durch gekennzeichnet, dass die Windenergieanlage 10 derart gesteuert wird, dass sie stets nur die benötigte elektrische Leistung erzeugt, falls der Verbrauch der elektrischen Leistung im Netz geringer ist als das elektrische Energieerzeugungsvermögen der Windenergieanlage.
Ausführungsform 20 Verfahren nach Ausführungsform 19, dadurch gekennzeichnet, dass bei Unterschreiten der benötigten Leistung der regenerativen Energiequelle nutzende Energieerzeuger 10, 12 zunächst elektrische Zwischenspeicher 14, 16, 18 zur Energieabgabe herangezogen werden. Ausführungsform 21 Verfahren nach einer der Ausführungsformen 19 und 20, dadurch gekennzeichnet, dass Verbrennungsmotoren zum Antreiben wenigstens eines zweiten Generators vorgesehen sind, und die Verbrennungsmotoren nur dann eingeschaltet werden, wenn die von den regenerativen Energiequellen nutzende Energieerzeuger 10,
12 und/oder die von elektrischen Zwischenspeichern 14, 16, 18 abgegebene Leistung einen vorgebbaren Schwellwert für einen vorgebbaren Zeitabschnitt unterschreiten.
Ausführungsform 22 Verfahren nach Ausführungsform 21, dadurch gekennzeichnet, dass zum Laden der Zwischenspeicher aus regenerativen Quellen mehr Energie erzeugt wird als für die Verbraucher am Netz benötigt wird.
Ausführungsform 23 Verfahren nach einer der vorhergehenden Ausführungsformen, dadurch gekennzeichnet, dass zur Beseitigung von Frequenzinstabilitäten oder Abweichungen der Netzfrequenz von ihrem Sollwert bevorzugt elektrische Zwischenspeicher zur Energieabgabe herangezogen werden, welche ohne wesentlich irreversible Kapazitätseinbußen häufig schnell geladen bzw. entladen werden können.
Ausführungsform 24 Verfahren nach einer der vorhergehenden Ausführungsformen, dadurch gekennzeichnet, dass Zwischenspeicher vom Typ eines Akkumulatorblocks oder eines Batteriespeichers bevorzugt dann zur Netzstützung herangezogen werden, wenn die vom Netz benötigte Leistung von regenerativen Energiequellen gar nicht oder nur unzureichend geliefert werden kann.
Ausführungsform 25 Verwendung eines Synchrongenerators als Netzbildner für einen netzgeführten Wechselrichter zur Einspeisung einer Wechselspannung in ein elektrisches Versorgungsnetz, wobei der Generator im Motorbetrieb arbeitet und der Antrieb des Generators durch ein Schwungrad und/oder durch die Zurverfügungstellung von elektrischer Energie eines regenerativen Energieerzeugers erfolgt.

## Patentansprüche

1. Verwendung eines Synchrongenerators (32) als Netzbildner für einen netzgeführten Wechselrichter (24) zur Einspeisung einer Wechselspannung in ein elektrisches Versorgungsnetz, wobei der Synchrongenerator (32) im Motorbetrieb arbeitet und der Antrieb des Synchrongenerators (32) durch mindestens einen Zwischenspeicher (14, 16, 18) und/oder durch die Zurverfügungstellung von elektrischer Energie eines regenerativen Energieerzeugers erfolgt.

2. Verwendung nach Anspruch 1, wobei das elektrische Versorgungsnetz ein Inselnetz ist.

3. Verwendung nach Anspruch 1 oder 2, wobei der regenerative Energieerzeuger eine Windenergieanlage ist.

4. Verwendung nach einem der vorstehenden Ansprüche, wobei der Zwischenspeicher ein Schwungrad ist.

5. Verwendung nach einem der vorstehenden Ansprüche, wobei die Windenergieanlage durch ihre vollständige Regelbarkeit, also variable Drehzahl und variable Blattverstellung, in der Lage ist, genau die benötigte Leistung zu erzeugen.

6. Verwendung nach einem der vorstehenden Ansprüche, wobei der Wechselrichter aus einem Gleichrichter, einem Gleichspannungszwischenkreis und einem Frequenzumrichter besteht.

7. Verwendung nach einem der vorstehenden Ansprüche, wobei der mindestens eine Zwischenspeicher elektrische Energie speichern und bei Bedarf schnell abgeben kann, um Schwankungen der verfügbaren Leistung und/oder eine erhöhte Leistungsnachfrage spontan auszugleichen und andererseits verfügbare Energie, die jedoch momentan nicht nachgefragt wird, nutzen zu können.

8. Verwendung nach Anspruch 7, wobei der mindestens eine Zwischenspeicher einen elektrochemischen Speicher wie z.B. einen Akkumulatoren und/oder einen Kondensator (Cap) und/oder einen chemischen Speicher wie z.B. einen Wasserstoffspeicher, in welchem durch Elektrolyse mit der überschüssigen elektrischen Energie erzeugter Wasserstoff gespeichert wird, umfasst.

9. Verwendung nach einem der vorstehenden Ansprüche, wobei die Windenergieanlage eine Sammelschiene zum Einspeisen der erzeugten Energie in das Netz aufweist und eine an die Sammelschiene angeschlossene Vorrichtung zum Erfassen der im Netz benötigten Leistung vorgesehen ist.

10. Verwendung nach einem der vorstehenden Ansprüche, wobei im Falle eines Anstiegs des Energiebedarfs der Verbraucher auf ein Maß, dass dieser von der Windenergieanlage allein nicht mehr gedeckt werden kann, ein Verbrennungsmotor (30) anläuft und durch eine mechanische Verbindung mit dem Synchrongenerator (32) dieser im Generatorbetrieb die benötigte Energie liefert.

11. Verwendung nach einem der vorstehenden Ansprüche, wobei die Speicherkapazität des mindestens einen Zwischenspeichers so dimensioniert ist, dass Leistungsschwankungen über einige Stunden bis zu einige Tagen ausgeglichen werden können.

12. Verwendung nach einem der vorstehenden Ansprüche, wobei der mindestens eine Zwischenspeicher ein Akkumulatorblock (14), also z.B. eine Batterie oder ein Kondensatorblock (18), z.B. ein Kondensator vom Typ "Ultracap" der Firma Siemens, ist.

13. Verwendung nach einem der vorstehenden Ansprüche, wobei der Synchrongenerator einen Umrichter mit einem Gleichspannungszwischenkreis mit wenigstens einem ersten Gleichrichter und einem Wechselrichter enthält.
